# EUROPEAN PATENT SPECIFICATION

(11) **EP 3 886 426 B1**
(45) Date of publication and mention of the grant of the patent: **08.03.2023**
(21) Application number: 19905457.8
(22) Date of filing: 09.12.2019
(51) Int. Cl.: H04N 5/232, G02B 27/02, G06T 7/70, G09G 5/00, H04N 5/225, H04N 5/64, G02B 27/00, G02B 27/01, G02B 27/32, G02B 27/28

(54) **VIDEO DISPLAY SYSTEM, VIDEO DISPLAY DEVICE, AND VIDEO DISPLAY METHOD**
VIDEOANZEIGESYSTEM, VIDEOANZEIGEVORRICHTUNG, UND VIDEOANZEIGEVERFAHREN
SYSTÈME D'AFFICHAGE VIDÉO, DISPOSITIF D'AFFICHAGE VIDÉO ET PROCÉDÉ D'AFFICHAGE VIDÉO

(30) Priority: 26.12.2018 JP 2018242504
(43) Date of publication of application: 29.09.2021
(73) Proprietor: JVCKENWOOD CORPORATION, Yokohama-shi, Kanagawa 2210022 (JP)
(72) Inventor: YUFUNE, Shuta, Yokohama-shi, Kanagawa 221-0022 (JP)
(74) Representative: Schmidbauer, Andreas Konrad
(86) International application number: PCT/JP2019/048074
(87) International publication number: WO 2020/137487

(56) References cited:
- JP-A- 2009 237 878
- JP-A- 2012 033 073
- JP-A- 2012 175 668
- JP-A- 2015 501 560
- CELOZZI C ET AL: "A 6-DOF ARTag-based tracking system", IEEE TRANSACTIONS ON CONSUMER ELECTRONICS, IEEE SERVICE CENTER, NEW YORK, NY, US, vol. 56, no. 1, 1 February 2010 (2010-02-01), pages 203-210, XP011306133, ISSN: 0098-3063

## Description

### [TECHNICAL FIELD]

The present invention relates to a video display system, a video display device, and a video display method for a head-mounted display.

### [BACKGROUND ART]

A see-through head-mounted display is known as a device that produces mixed reality (MR). The head-mounted display is abbreviated below to a "HMD". The HMD is a video display device that displays video on a display unit to be mounted on the head of the user, so as to provide virtual reality (a deep sense of immersion) for the user. To improve the deep sense of immersion, images associated with attitudes of the HMD are displayed on the display unit.

The HMD captures a marker with a camera included in the HMD, and calculates a relative positional relationship between the marker and the HMD, and information regarding the direction in which the marker is being captured. The display unit changes the images to be displayed in association with the attitudes of the HMD in accordance with the information of a change in the attitudes, so as to improve the deep sense of immersion. Japanese Unexamined Patent Application Publication No. 2017-10120 discloses an example of the HMD.

Celozzi, C., Paravati, G., Sanna, A., and Lamberti, F., "A 6-DOF ARTag-based tracking system," in IEEE Transactions on Consumer Electronics, vol. 56, no. 1, pp. 203-210, February 2010, presents a system to track position and orientation of a generic mobile device equipped with a camera using a set of variable size fiducial markers. The system provides six degrees-of-freedom (6-DOF) by tracking fiducial markers through the camera and deriving the position and orientation of the device. The system has been integrated in a Cave Automatic Virtual Environment (CAVE) through the use of projectors and polarizers.

### [SUMMARY OF THE INVENTION]

The invention is defined by the independent claims. The dependent claims define advantageous embodiments. The see-through HMD used for producing the mixed reality (MR) provides the user with video (such as computer graphics (CG)) displayed on the display unit mixed with actual video, and thus indicates the marker included in the actual video together, which obstructs the field of view of the user.

In view of the foregoing conventional problem, an object of the present disclosure is to provide a video display system, a video display device, and a video display method capable of calculating an amount of change in attitude of the video display device with respect to a reference position in accordance with video based on a marker captured with a camera, and allowing a user to see the video displayed on a display unit mixed with actual video without any obstruction.

The present embodiment provides a video display system inter alia including a marker having a reference pattern, a first polarizing filter arranged to correspond to the marker and having a first polarization characteristic, a video display device including a camera configured to capture the marker via the first polarizing filter, a display unit having a light transmission property, and a second polarizing filter arranged to correspond to the display unit and having a second polarization characteristic contrary to the first polarizing filter, and an amount-of-change calculation unit configured to calculate an amount of change between a first image obtained such that the camera captures the reference pattern in a first attitude and a second image obtained such that the camera captures the reference pattern in a second attitude, and calculate an amount of change in an attitude in accordance with the amount of change between the first image and the second image.

The present embodiment provides a video display device inter alia including a display unit having a light transmission property, a first polarizing filter having a first polarization characteristic arranged to correspond to a marker having a reference pattern, a second polarizing filter arranged to correspond to the display unit and having a second polarization characteristic contrary to the first polarizing filter, a camera configured to acquire a first image by capturing the marker via the first polarizing filter in a first attitude and a second image by capturing the marker via the first polarizing filter in a second attitude, and an amount-of-change calculation unit configured to calculate an amount of change between the first image the second image, and calculate an amount of change in an attitude in accordance with the amount of change between the first image and the second image.

The present embodiment provides a video display method inter alia including arranging a first polarizing filter having a first polarization characteristic to correspond to a marker having a reference pattern, arranging a second polarizing filter having a second polarization characteristic contrary to the first polarizing filter to correspond to a display unit, causing a camera of a video display device to acquire a first image by capturing the marker via the first polarizing filter in a first attitude and a second image by capturing the marker via the first polarizing filter in a second attitude, and causing an amount-of-change calculation unit to calculate an amount of change between the first image and the second image, and calculate an amount of change in an attitude in accordance with the amount of change between the first image and the second image.

The video display system, the video display device, and the video display method can calculate the amount of change in the attitude of the video display device with respect to a reference position in accordance with video based on the marker captured with the camera, and allowing the user to see the video displayed on the display unit mixed with actual video without any obstruction.

### [BRIEF DESCRIPTION OF THE DRAWINGS]

Fig. 1 is an external view showing an example of a video display device according to first and second embodiments.
Fig. 2 is a block diagram showing an example of a video display system according to the first embodiment.
Fig. 3A is a view showing an example of the video display system according to the first and second embodiments.
Fig. 3B is a view showing an example of the video display system according to the first and second embodiments.
Fig. 4 is a view showing an example of a marker.
Fig. 5 is a flowchart showing an example of a video display method according to the first and second embodiments.
Fig. 6A is a view showing an example of a marker reference image.
Fig. 6B is a view showing an example of the marker reference image.
Fig. 6C is a view showing an example of a relationship between the marker reference image and a marker capture image.
Fig. 7 is a view for explaining a tracking amount.
Fig. 8A is a view showing an example of a lookup table.
Fig. 8B is a view showing an example of the lookup table.
Fig. 9 is a block diagram showing an example of the video display system according to the second embodiment.
Fig. 10A is a view showing an example of a marker.
Fig. 10B is a view showing another example of the marker.

### [DESCRIPTION OF EMBODIMENTS]

### First Embodiment

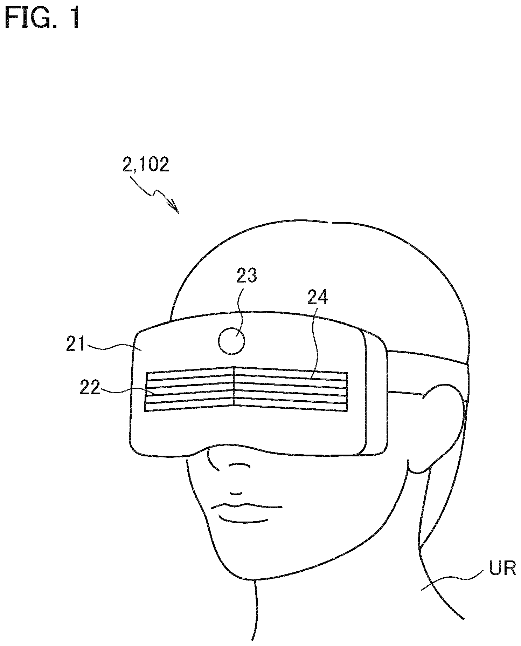

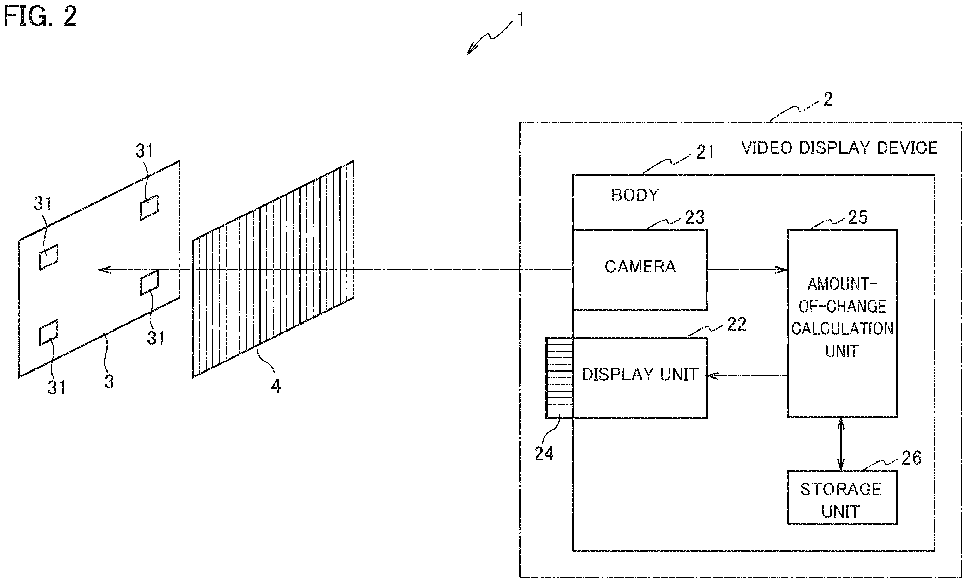

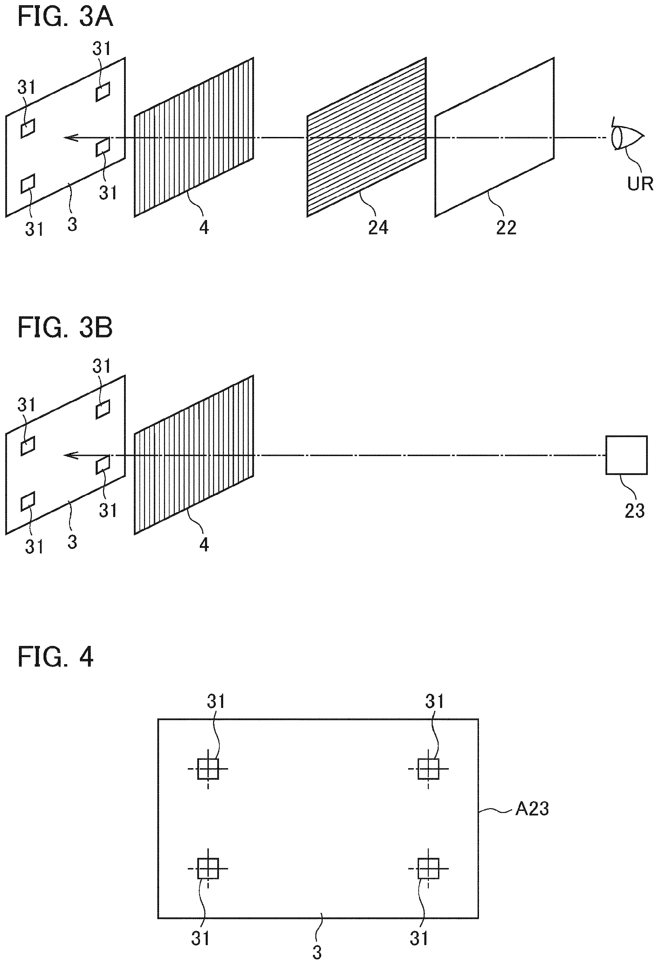

Fig. 1 is a view showing an example of a video display device according to a first embodiment. Fig. 2, Fig. 3A, and Fig. 3B are views each showing an example of a video display system according to the first embodiment. As illustrated in Fig. 2, the video display system 1 according to the first embodiment includes the video display device 2, a marker 3, and a polarizing filter 4 (a first polarizing filter). The marker 3 has reference patterns 31. The marker 3 used herein may be a paper or a plate on which the reference patterns 31 are printed, or may be a display panel such as a liquid crystal panel on which the reference patterns 31 are displayed.

The polarizing filter 4 is arranged to correspond to the marker 3, and is in contact with or arranged adjacent to the marker 3. Fig. 2, Fig. 3A, and Fig. 3B each show the marker 3 and the polarizing filter 4 in a state of being separated from each other for illustration purposes. The polarizing filter 4 has first polarization characteristics.

As illustrated in Fig. 1, the video display device 2 according to the first embodiment is a see-through HMD for producing MR or augmented reality (AR). As illustrated in Fig. 1 or Fig. 2, the video display device 2 includes a body 21, a display unit 22, a camera 23, a polarizing filter 24 (a second polarizing filter), an amount-of-change calculation unit 25, and a storage unit 26. The polarizing filter 24 has second polarization characteristics.

The amount-of-change calculation unit 25 is installed in the body 21. The amount-of-change calculation unit 25 used herein may be a central processing unit (CPU). The storage unit 26 used herein may be an internal memory or an external memory. The video display device 2 may include a controller that controls the display unit 22, the camera 23, the amount-of-change calculation unit 25, and the storage unit 26. The controller is installed in the body 21. The controller used herein may be a CPU.

The display unit 22 has light transmission properties and is fixed to the body 21. The display unit 22 displays video based on video data externally input. The user UR, when putting on the video display device 2, can see video (such as CG) displayed on the display unit 22 mixed with actual video.

The display unit 22 may include a right-eye display unit and a left-eye display unit. The display unit 22 displays right-eye video on the right-eye display unit and displays left-eye video on the left-eye display unit based on the video data externally input. The user UR, when putting on the video display device 2, thus can three-dimensionally see combined video of the right-eye video and the left-eye video mixed with actual video.

The camera 23 is fixed to the body 21, and captures the front side and the circumferential region of the user UR in the state in which the video display device 2 is mounted on the head of the user UR. The polarizing filter 24 is arranged to correspond to the display unit 22 in a region excluding the camera 23 in the body 21. In particular, the polarizing filter 24 is arranged in the display unit 22 on the opposite side of the user UR in the state in which the video display device 2 is mounted on the head of the user UR. The user UR thus sees the actual video through the polarizing filter 24 and the display unit 22.

The polarizing filter 4 and the polarizing filter 24 have the polarization characteristics contrary to each other. Namely, the first polarization characteristics and the second polarization characteristics have a relationship contrary to each other. The polarizing filter 4 and the polarizing filter 24 have a relationship between a polarizer and an analyzer, for example. The combination of the polarizing filter 4 and the polarizing filter 24 functions as a light-blocking filter. The polarizing filters 4 and 24 may have either linear polarization characteristics or circular polarization characteristics.

The polarizing filter 4 and the polarizing filter 24 in the case of the linear polarization characteristics have the polarization characteristics in which the respective polarizing directions are orthogonal to each other. In particular, the polarizing filter 4 has the polarization characteristics of either s-polarization or p-polarization (for example, s-polarization), while the polarizing filter 24 has the polarization characteristics of the other polarization (for example, p-polarization).

The polarizing filter 4 and the polarizing filter 24 in the case of the circular polarization characteristics have the polarization characteristics in which the respective polarizing directions are opposite to each other. In particular, the polarizing filter 4 has the polarization characteristics of either right-handed polarization or left-handed polarization (for example, right-handed polarization), while the polarizing filter 24 has the polarization characteristics of the other polarization (for example, the left-handed polarization). Fig. 1, Fig. 2, Fig. 3A, and Fig. 3B each schematically illustrate the state in which the polarizing filter 4 and the polarizing filter 24 have the linear polarization characteristics.

As illustrated in Fig. 3A, the polarizing filter 4 is arranged to correspond to the marker 3. In the state in which the marker 3 and the display unit 22 are opposed to each other, the polarizing filters 4 and 24 are arranged between the marker 3 and the display unit 22. The marker 3 may be entirely covered with the polarizing filter 4, or the respective reference patterns 31 included in the marker 3 may be covered with the polarizing filter 4. The marker 3 or the respective reference patterns 31 may be either in contact with or separated from the polarizing filter 4. Similarly, the display unit 22 and the filter 24 may be either in contact with or separated from each other when the display unit 22 is covered with the polarizing filter 24.

In the state in which the video display device 2 is mounted on the head of the user UR, the region corresponding to the marker 3 is the light-blocking region defined by the polarizing filter 4 and the polarizing filter 24 for the user UR. The marker 3 is thus not recognized by the user UR. The user UR sees the region other than the marker 3 through the polarizing filter 24. The user UR thus can see the video displayed on the display unit 22 mixed with the actual video without obstruction by the marker 3.

The polarizing filter 24 is arranged in the region excluding the camera 23 in the video display device 2. As illustrated in Fig. 3B, in the state in which the video display device 2 is mounted on the head of the user UR, the camera 23 captures the front side and the circumferential region of the user UR via the polarizing filter 4. The camera 23 thus can capture the marker 3.

Fig. 4 is a view showing an example of the marker 3. The region illustrated in Fig. 4 corresponds to a region A23 captured by the camera 23 (referred to below as an "angle of view A23") . The reference patterns 31 are preferably arranged in a wide range in the angle of view A23. The reference patterns 31 may be composed of a single pattern or a plurality of patterns.

When the marker 3 includes the single reference pattern 31, for example, the pattern preferably has a smaller size than the angle of view A23 so as to be arranged in a wide range in the angle of view A23. When the marker 3 includes the plural reference patterns 31, the plural patterns are preferably provided in a dispersed state so as to be arranged in a wide range in the angle of view A23.

Fig. 4 illustrates the case, as an example of the reference patterns 31, in which four square patterns are dispersed and arranged adjacent to the four corners of the angle of view A23. The shape, the number, and the arrangement of the reference patterns 31 may be determined as appropriate.

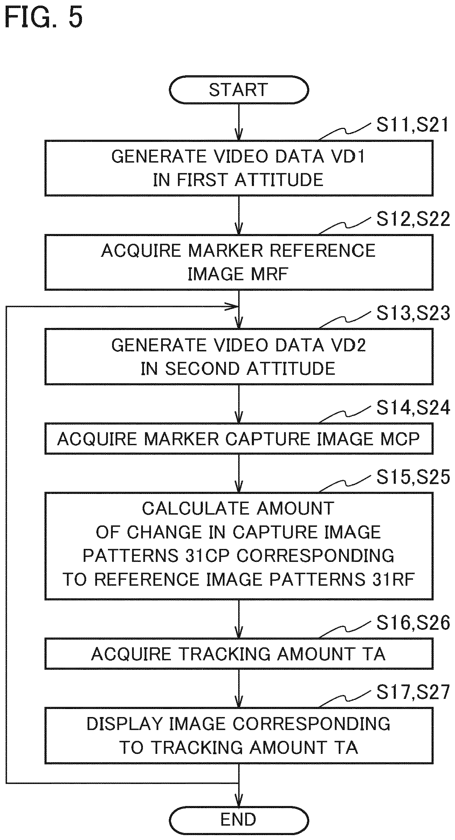

An example of a video display method according to the first embodiment is described below with reference to the flowchart shown in Fig. 5, in a case in which the user UR, when putting the video display device 2 on the head, changes the attitude from an initial state (a reference position) of the head. The video display method according to the first embodiment is particularly a method of calculating the amount of change in the state (the attitude) of the video display device 2 (the body 21) with respect to the reference position in accordance with the video based on the marker 3 captured with the camera 23 of the video display device 2.

In the state in which the video display device 2 is mounted on the head of the user UR, and the head of the user UR is in the initial state (the first state (the first attitude)), the camera 23 captures the marker 3 to generate video data VD1 (first video data) in the first attitude, and outputs the data to the amount-of-change calculation unit 25 in step S11. The term "initial state" refers to a state in which the head of the user UR is directed to the front side of the user UR, for example. The camera 23 continuously captures and keeps generating the video data VD.

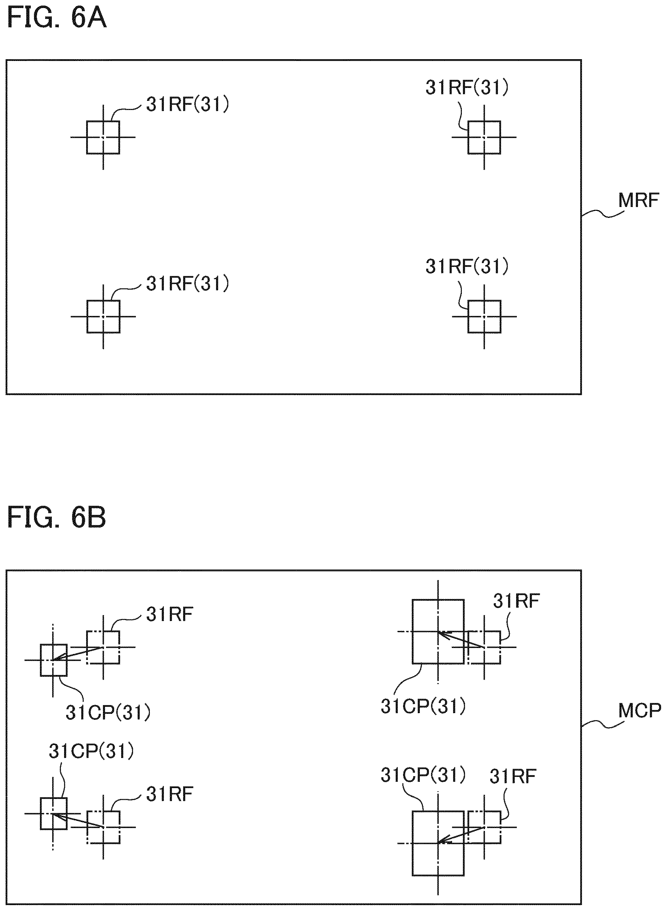

In step S12, the amount-of-change calculation unit 25 acquires video data of the marker 3 as a marker reference image MRF (a first image) from the video data VD1, and stores the data in the storage unit 26. Fig. 6A shows an example of the marker reference image MRF.

In the state in which the video display device 2 is mounted on the head of the user UR, and the user UR changes the direction of the head (for example, rotates in the rightward direction) from the initial state to a second state (a second attitude), the camera 23 captures the marker 3 to generate video data VD2 (second video data) in the second attitude, and outputs the data to the amount-of-change calculation unit 25 in step S13. Since the camera 23 continuously captures and keeps generating the video data VD, the camera 23 generates the video data VD2 corresponding to the second attitude being changed with the passage of time.

In step S14, the amount-of-change calculation unit 25 acquires video data of the marker 3 as a marker capture image MCP (a second image) from the video data VD2, and stores the data in the storage unit 26. Fig. 6B shows an example of the marker capture image MCP.

In step S15, the amount-of-change calculation unit 25 reads out the marker reference image MRF and the marker capture image MCP from the storage unit 26. To distinguish the reference patterns 31 in the marker reference image MRF from the reference patterns 31 in the marker capture image MCP, the reference patterns 31 in the marker reference image MRF are referred to as reference image patterns 31RF (first image patterns), and the reference patterns 31 in the marker capture image MCP are referred to as capture image patterns 31CP (second image patterns).

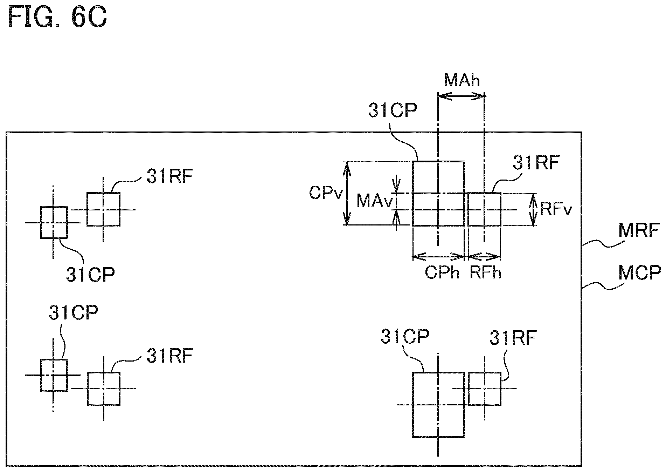

The amount-of-change calculation unit 25 further calculates the amount of change in the capture image patterns 31CP corresponding to the reference image patterns 31RF. In particular, as illustrated in Fig. 6C, the amount-of-change calculation unit 25 calculates a shifted amount MAh in the horizontal direction and a shifted amount MAv in the vertical direction of the capture image patterns 31CP corresponding to the reference image patterns 31RF. The shifted amount MAh in the horizontal direction is referred to below as a horizontal shifted amount MAh, and the shifted amount MAv in the vertical direction is referred to below as a vertical shifted amount MAv.

The amount-of-change calculation unit 25 calculates the amount of change in length CAh in the horizontal direction and the amount of change in length CAv in the vertical direction of the capture image patterns 31CP corresponding to the reference image patterns 31RF. The amount of change in length CAh in the horizontal direction is referred to below as a horizontal changed amount CAh, and the amount of change in length CAv in the vertical direction is referred to below as a vertical changed amount CAv. The horizontal shifted amount MAh, the vertical shifted amount MAv, the horizontal changed amount CAh, and the vertical changed amount CAv are each the amount of change in the capture image patterns 31CP corresponding to the reference image patterns 31RF.

The horizontal shifted amount MAh and the vertical shifted amount MAv can be obtained such that a distance is calculated from a middle point of the respective reference image patterns 31RF to a middle point of the respective capture image patterns 31CP in each of the horizontal direction and the vertical direction, for example. The horizontal changed amount CAh can be obtained such that a length CPh in the horizontal direction of the respective capture image patterns 31CP is subtracted from a length RFh in the horizontal direction of the respective reference image patterns 31RF, or the length RFh is subtracted from the length CPh. The vertical changed amount CAv can be obtained such that a length CPv in the vertical direction of the respective capture image patterns 31CP is subtracted from a length RFv in the vertical direction of the respective reference image patterns 31RF, or the length RFv is subtracted from the length CPv.

The storage unit 26 stores a lookup table 27 for acquiring a tracking amount TA in accordance with the amount of change in the capture image patterns 31CP corresponding to the reference image patterns 31RF. The lookup table 27 is abbreviated below to a LUT 27.

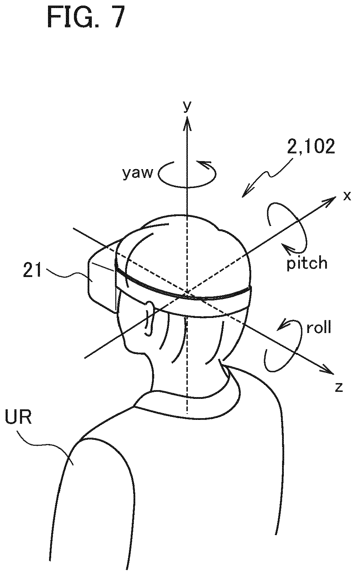

The tracking amount TA is described below with reference to Fig. 7. The tracking amount TA refers to the amount of change in the attitude of the video display device 2 (the HMD), and in particular, is given by a position tracking amount indicating the shifted amount from a reference point and a head tracking amount indicating the amount of change in rotation from the reference point. The reference point is an optional position or direction of the front side defined by a calibration, or a position or direction at the point when the power is turned on.

Fig. 7 illustrates a right-handed coordinate system. The x-axis is an axis in the horizontal direction as viewed from the camera 23 located at the reference point, in which the rightward direction is a plus (positive) side and the leftward direction is a minus (negative) side. The y-axis is an axis in the vertical direction as viewed from the camera 23 located at the reference point, in which the upward direction is the plus side and the downward direction is the minus side. The z-axis is an axis in the depth direction as viewed from the camera 23 located at the reference point, in which the rearward direction is the plus side and the forward (front) direction is the minus side.

The position tracking amount is represented by three components of the shifted amount in the x-axis direction, the shifted amount in the y-axis direction, and the shifted amount in the z-axis direction. The shifted amount in the x-axis direction is the shifted amount in the horizontal direction, in which the rightward direction is the plus side and the leftward direction is the minus side as viewed from the camera 23. The shifted amount in the y-axis direction is the shifted amount in the vertical direction, in which the upward direction is the plus side and the downward direction is the minus side as viewed from the camera 23. The shifted amount in the z-axis direction is the shifted amount in the depth direction, in which the rearward direction is the plus side and the forward direction is the minus side as viewed from the camera 23.

The head tracking amount is represented by three components of a rotation amount in a pitch direction, a rotation amount in a yaw direction, and a rotation amount in a roll direction. The rotation amount in the pitch direction is a vertical rotation amount about the x-axis, in which the rotation in the upward direction is the plus side and the rotation in the downward direction is the minus side. The rotation amount in the yaw direction is a right-left rotation amount about the y-axis, in which the leftward (the left-handed) direction is the plus side and the rightward (right-handed) direction is the minus side. The rotation amount in the roll direction is a right-left rotation amount about the z-axis, in which the leftward (counterclockwise) direction is the plus side and the rightward (clockwise) direction is the minus side.

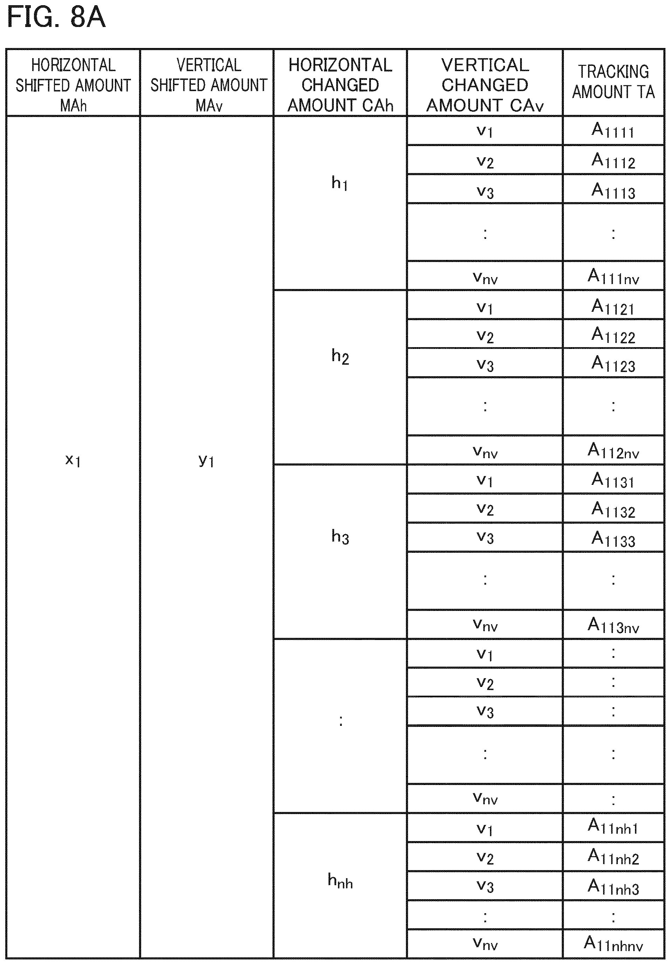

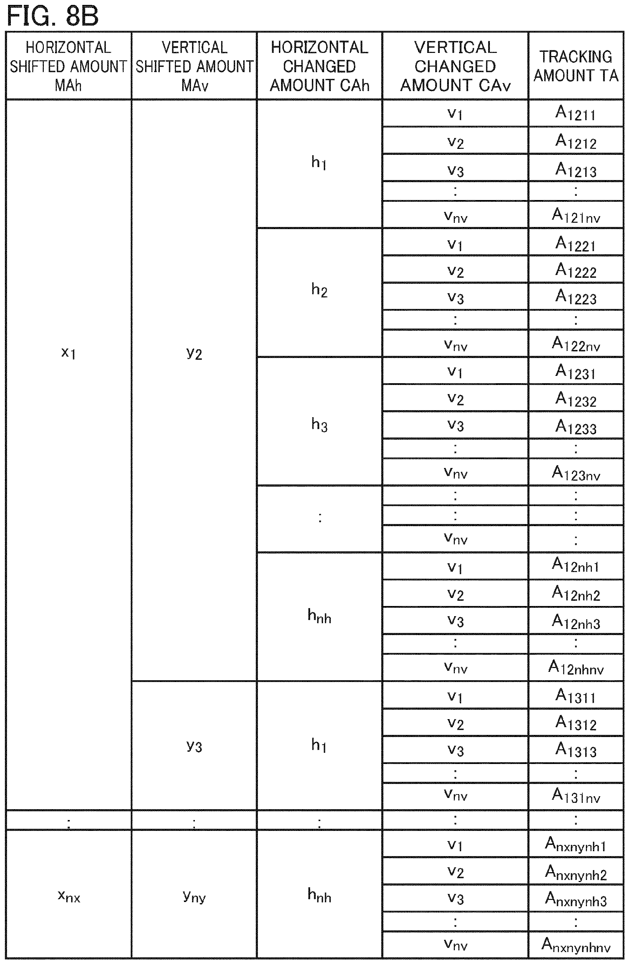

Fig. 8A and Fig. 8B each show an example of the LUT 27. Fig. 8A and Fig. 8B each illustrate a part of the single LUT 27 divided into two. Fig. 8A indicates the tracking amount TA in which the horizontal shifted amount MAh is x1, the vertical shifted amount MAv is y1, the horizontal changed amount CAh is h₁ to hₙₕ, and the vertical changed amount CAv is v₁ to vₙᵥ. FIG. 8B indicates the tracking amount TA in which the horizontal shifted amount MAh is x₁ to xₙₓ, the vertical shifted amount MAv is y₂ to y_{ny}, the horizontal changed amount CAh is h₁ to hₙₕ, and the vertical changed amount CAv is v₁ to vₙᵥ. The total number of the elements of the tracking amount TA in the LUT 27 is a product of the number of the elements nₘₕ of the horizontal shifted amount MAh, the number of the elements nₘᵥ of the vertical shifted amount MAv, the number of the elements n_{ch} of the horizontal changed amount CAh, and the number of the elements n_{cv} of the vertical changed amount CAv (nₘₕ × nₘᵥ × n_{ch} × n_{cv}).

In step S16, the amount-of-change calculation unit 25 reads out the LUT 27 from the storage unit 26. The amount-of-change calculation unit 25 also acquires the tacking amount TA from the LUT 27 in accordance with the amount of change in the capture image patterns 31CP corresponding to the reference image patterns 31RF.

The amount-of-change calculation unit 25 acquires the tracking amount TA in accordance with the horizontal shifted amount MAh, the vertical shifted amount MAv, the horizontal changed amount CAh, and the vertical changed amount CAv, for example. In the case of the horizontal shifted amount MAh = x₁, the vertical shifted amount MAv = y₁, the horizontal changed amount CAh = h₃, and the vertical changed amount CAv =V₃, the amount-of-change calculation unit 25 acquires the tracking amount TA = A₁₁₃₃ according to the LUT 27.

The marker 3 includes the plural reference patterns 31, a plurality of LUTs 27 corresponding to the respective patterns may be stored in the storage unit 26. The amount-of-change calculation unit 25 in this case calculates the horizontal shifted amount MAh, the vertical shifted amount MAv, the horizontal changed amount CAh, and the vertical changed amount CAv for the respective patterns, and acquires the tracking amount TA according to the LUT 27 corresponding to the respective patterns. Acquiring the tracking amount TA based on the plural patterns can improve the accuracy of the tracking amount TA.

In step S17, the amount-of-change calculation unit 25 generates or acquires an image corresponding to the tracking amount TA, and displays the image on the display unit 22. Since the camera 23 continuously captures and keeps generating the video data VD, the video display device 2 repeatedly executes steps S13 to S17.

In step S15, the amount-of-change calculation unit 25 may calculate a rate of distortion DSh in the horizontal direction of the capture image patterns 31CP in accordance with the lengths RFh and CPh in the horizontal direction, and calculate a rate of distortion DSv in the vertical direction of the capture image patterns 31CP in accordance with the lengths RFv and CPv in the vertical direction. The amount-of-change calculation unit 25 may acquire the tracking amount TA in accordance with the rates of distortion DSh and DSv.

The video display system 1, the video display device 2, and the video display method according to the first embodiment cause the camera 23 to capture the marker 3 in the first and second attitudes to generate the first and second video data VD1 and VD2. The amount-of-change calculation unit 25 acquires the marker reference image MFR and the marker capture image MCP in accordance with the first and second video data VD1 and VD2. The amount-of-change calculation unit 25 further calculates the amount of change in the reference patterns 31 (the capture image patterns 31CP) in the marker capture image MCP corresponding to the reference patterns 31 (the reference image patterns 31RF) in the marker reference image MRF. The amount-of-change calculation unit 25 acquires the tracking amount TA in accordance with the calculated amount of change, generates or acquires the image corresponding to the tracking amount TA, and displays the image on the display unit 22.

In the video display system 1, the video display device 2, and the video display method according to the first embodiment, the marker 3 is not recognized by the user UR due to the combination of the polarizing filter 4 and the polarizing filter 24 in the state in which the video display device 2 is mounted on the head of the user UR.

The video display system 1, the video display device 2, and the video display method according to the first embodiment thus can calculate the amount of change in the state (the attitude) of the video display device 2 with respect to the reference position in accordance with the video based on the marker 3 captured by the camera 23, and allow the user UR to see the video displayed on the display unit 22 mixed with the actual video without obstruction by the marker 3.

The video display system 1, the video display device 2, and the video display method according to the first embodiment are illustrated above with the yaw direction as the rotation direction, but can also be applied to the case of the pitch direction or the roll direction.

The video display system 1, the video display device 2, and the video display method according to the first embodiment can calculate the shifted amount in the case in which the user UR shifts parallel to the marker 3 in accordance with the amount of change in the capture image patterns 31CP corresponding to the reference image patterns 31RF (in particular, the horizontal shifted amount MAh and the vertical shifted amount MAv) in the state in which the video display device 2 is mounted on the head of the user UR.

The video display system 1, the video display device 2, and the video display method according to the first embodiment can calculate the shifted amount in the case in which the user UR comes closer to or moves away from the marker 3 in accordance with the amount of change in the capture image patterns 31CP corresponding to the reference image patterns 31RF (in particular, the horizontal changed amount CAh and the vertical changed amount CAv) in the state in which the video display device 2 is mounted on the head of the user UR. To calculate the shifted amount, a lens coefficient of the camera 23 needs to be used.

### Second Embodiment

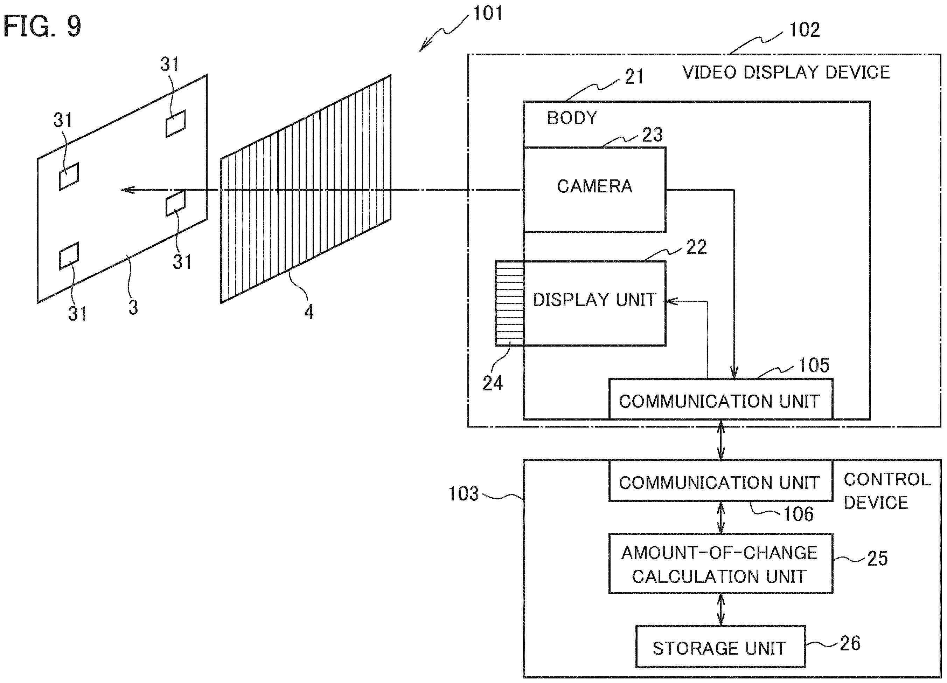

An example of a video display system according to a second embodiment is described below with reference to Fig. 9. The same constituent elements as those in the first embodiment are denoted by the same reference numerals for illustration purposes. The video display system 101 according to the second embodiment includes a video display device 102, a control device 103, the marker 3, and the polarizing filter 4.

The video display system 102 according to the second embodiment is a see-through HMD for producing MR. As illustrated in Fig. 1, the external appearance of the video display device 102 is substantially the same as the external appearance of the video display device 2. The video display system 102 includes the body 21, the display unit 22, the camera 23, the polarizing filter 24, and a communication unit 105 (a second communication unit). The communication unit 105 is installed in the body 21. The video display device 102 may include a controller that controls the display unit 22 and the camera 23. The controller is installed in the body 21. The controller used herein may be a CPU.

The control device 103 includes the amount-of-change calculation unit 25, the storage unit 26, and a communication unit 106 (a first communication unit). The communication unit 105 and the communication unit 106 are connected to each other via wireless line or a wired line. The control device 103 used herein may be a computer apparatus. The control device 103 may include a controller that controls the amount-of-change calculation unit 25 and the storage unit 26.

An example of a video display method according to the second embodiment is described below with reference to the flowchart shown in Fig. 5, in a case in which the user UR, when putting the video display device 102 on the head, changes the attitude from the initial state (the reference position) of the head. The video display method according to the second embodiment is particularly a method of calculating the amount of change in the state (the attitude) of the video display device 102 with respect to the reference position in accordance with the video based on the marker 3 captured with the camera 23 of the video display device 102.

In the state in which the video display device 102 is mounted on the head of the user UR, and the head of the user UR is in the initial state (the first state (the first attitude)), the camera 23 captures the marker 3 to generate video data VD1 (first video data) in the first attitude in step S21. The term "initial state" refers to a state in which the head of the user UR is directed to the front side of the user UR, for example. The camera 23 outputs the video data VD1 to the amount-of-change calculation unit 25 in the control device 103 via the communication unit 105 and the communication unit 106.

In step S22, the amount-of-change calculation unit 25 acquires video data of the marker 3 as a marker reference image MRF from the video data VD1, and stores the data in the storage unit 26.

In the state in which the video display device 102 is mounted on the head of the user UR, and the user UR changes the direction of the head (for example, rotates in the rightward direction) from the initial state to the second state (the second attitude), the camera 23 captures the marker 3 to generate video data VD2 (second video data) in the second attitude in step S23. The camera 23 outputs the video data VD2 to the amount-of-change calculation unit 25 in the control device 103 via the communication unit 105 and the communication unit 106. Since the camera 23 continuously captures and keeps generating the video data VD, the camera 23 generates the video data VD2 corresponding to the second attitude being changed with the passage of time.

In step S24, the amount-of-change calculation unit 25 acquires video data of the marker 3 as a marker capture image MCP from the video data VD2, and stores the data in the storage unit 26.

In step S25, the amount-of-change calculation unit 25 reads out the marker reference image MRF and the marker capture image MCP from the storage unit 26. The amount-of-change calculation unit 25 further calculates the amount of change in the capture image patterns 31CP corresponding to the reference image patterns 31RF. In particular, as illustrated in Fig. 6C, the amount-of-change calculation unit 25 calculates the horizontal shifted amount MAh, the vertical shifted amount MAv, the horizontal changed amount CAh, and the vertical changed amount CAv.

In step S26, the amount-of-change calculation unit 25 reads out the LUT 27 from the storage unit 26. The amount-of-change calculation unit 25 also acquires the tacking amount TA from the LUT 27 in accordance with the amount of change in the capture image patterns 31CP corresponding to the reference image patterns 31RF. The amount-of-change calculation unit 25 acquires the tracking amount TA in accordance with the horizontal shifted amount MAh, the vertical shifted amount MAv, the horizontal changed amount CAh, and the vertical changed amount CAv, for example.

In step S27, the amount-of-change calculation unit 25 generates or acquires an image corresponding to the tracking amount TA, and displays the image on the display unit 22. Since the camera 23 continuously captures and keeps generating the video data VD, the video display device 102 repeatedly executes steps S23 to S27.

In step S25, the amount-of-change calculation unit 25 may calculate a rate of distortion DSh in the horizontal direction of the capture image patterns 31CP in accordance with the lengths RFh and CPh in the horizontal direction, and calculate a rate of distortion DSv in the vertical direction of the capture image patterns 31CP in accordance with the lengths RFv and CPv in the vertical direction. The amount-of-change calculation unit 25 may acquire the tracking amount TA in accordance with the rates of distortion DSh and DSv.

The video display system 101, the video display device 102, and the video display method according to the second embodiment cause the camera 23 to capture the marker 3 in the first and second attitudes to generate the first and second video data VD1 and VD2. The amount-of-change calculation unit 25 acquires the marker reference image MFR and the marker capture image MCP in accordance with the first and second video data VD1 and VD2. The amount-of-change calculation unit 25 further calculates the amount of change in the reference patterns 31 (the capture image patterns 31CP) in the marker capture image MCP corresponding to the reference patterns 31 (the reference image patterns 31RF) in the marker reference image MRF. The amount-of-change calculation unit 25 acquires the tracking amount TA in accordance with the calculated amount of change, generates or acquires the image corresponding to the tracking amount TA, and displays the image on the display unit 22.

In the video display system 101, the video display device 102, and the video display method according to the second embodiment, the marker 3 is not recognized by the user UR due to the combination of the polarizing filter 4 and the polarizing filter 24 in the state in which the video display device 102 is mounted on the head of the user UR.

The video display system 101, the video display device 102, and the video display method according to the second embodiment thus can calculate the amount of change in the state (the attitude) of the video display device 102 with respect to the reference position in accordance with the video based on the marker 3 captured by the camera 23, and allow the user UR to see the video displayed on the display unit 22 mixed with the actual video without obstruction by the marker 3.

The video display system 101, the video display device 102, and the video display method according to the second embodiment are illustrated above with the yaw direction as the rotation direction, but can also be applied to the case of the pitch direction or the roll direction.

The video display system 101, the video display device 102, and the video display method according to the second embodiment can calculate the shifted amount in the case in which the user UR shifts parallel to the marker 3 in accordance with the amount of change in the capture image patterns 31CP corresponding to the reference image patterns 31RF (in particular, the horizontal shifted amount MAh and the vertical shifted amount MAv) in the state in which the video display device 102 is mounted on the head of the user UR.

The video display system 101, the video display device 102, and the video display method according to the second embodiment can calculate the shifted amount in the case in which the user UR comes closer to or moves away from the marker 3 in accordance with the amount of change in the capture image patterns 31CP corresponding to the reference image patterns 31RF (in particular, the horizontal changed amount CAh and the vertical changed amount CAv) in the state in which the video display device 102 is mounted on the head of the user UR.

In the first and second embodiments, the amount-of-change calculation unit 25 reads out the marker reference image MFR and the marker capture image MCP from the storage unit 26, and then acquires the lengths RFh, CPh, RFv, and CPv. The amount-of-change calculation unit 25 may acquire the lengths RFh and RFv when acquiring the marker reference image MFR from the video data VD1, and store the lengths RFh and RFv associated with the marker reference image MFR in the storage unit 26. The amount-of-change calculation unit 25 may acquire the lengths CPh and CPv when acquiring the marker capture image MCP from the video data VD2, and store the lengths CPh and CPv associated with the marker capture image MCP in the storage unit 26.

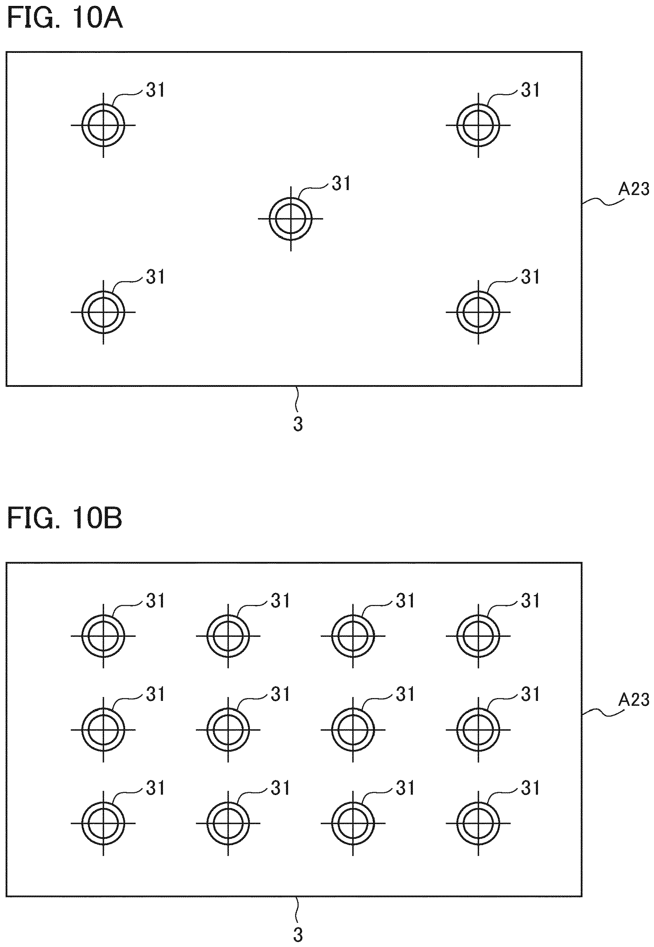

As illustrated in Fig. 4, the marker 3 in the first and second embodiments has the configuration in which the four rectangular reference patterns 31 are arranged. For example, as illustrated in Fig. 10A, the marker 3 may have a configuration in which the reference patterns 31 each including two concentric circles having different diameters and cross hairs passing through the center of the concentric circles, are arranged in the middle and adjacent to the four corners of the angle of view A23. As illustrated in Fig. 10B, the marker may have a configuration in which the reference patterns 31 each including two concentric circles having different diameters and cross hairs passing through the center of the concentric circles, are arranged in lines in the horizontal direction and the vertical direction of the angle of view A23.

### REFERENCE SIGNS LIST

- 1, 101: VIDEO DISPLAY SYSTEM
- 2, 102: VIDEO DISPLAY DEVICE
- 3: MARKER
- 4: POLARIZING FILTER (FIRST POLARIZING FILTER)
- 22: DISPLAY UNIT
- 23: CAMERA
- 24: POLARIZING FILTER (SECOND POLARIZING FILTER)
- 25: AMOUNT-OF-CHANGE CALCULATION UNIT
- 31: REFERENCE PATTERN
- MCP: MARKER CAPTURE IMAGE (SECOND IMAGE)
- MRF: MARKER REFERENCE IMAGE (FIRST IMAGE)

## Claims

1. A video display system (1,101) comprising:
a marker (3) having a reference pattern (31);
a first polarizing filter (4) having a first polarization characteristic;
a video display device (2,102) including
a camera (23) configured to capture the marker (3) via the first polarizing filter (4), and
a display unit (22) having a light transmission property allowing an actual video to be seen therethrough;
a second polarizing filter (24) having a second polarization characteristic contrary to the first polarizing filter (4); and
an amount-of-change calculation (25) unit configured to
calculate an amount of change between a first image (MRF) obtained such that the camera (23) captures the reference pattern (31) in a first attitude and a second image (MCP) obtained such that the camera (23) captures the reference pattern (31) in a second attitude, and
calculate an amount of change in an attitude in accordance with the amount of change between the first image (MRF) and the second image (MCP);
wherein the first polarizing filter (4) and the second polarizing filter (24) are arranged between the marker (3) and the display unit (22) in a state in which the marker (3) and the display unit (22) are opposed to each other; and
wherein the display unit (22) includes a right-eye display unit and a left-eye display unit and is configured to display a right-eye image on the right-eye display unit and a left-eye image on the left-eye display unit based on an image generated according to the amount of change in the attitude.

2. The video display system (1,101) according to claim 1, wherein the amount-of-change calculation unit (25) calculates the amount of change in the attitude of the video display device (2,102) in accordance with a shifted amount of a second image pattern in the second image (MCP) in a horizontal direction and a vertical direction corresponding to a first image pattern in the first image (MRF), and an amount of change in a length of the second image pattern in the horizontal direction and the vertical direction corresponding to the first image pattern.

3. The video display system (101) according to any one of claims 1 and 2, further comprising a control device (103) including the amount-of-change calculation unit (25) and a first communication unit (106),
wherein the video display device (101) further includes a second communication unit (105) connected to the first communication unit (106), and outputs the first image (MRF) and the second image (MCP) to the control device (103) via the first communication unit (106) and the second communication unit (105), and
the amount-of-change calculation unit (25) calculates the amount of change between the first image (MRF) and the second image (MCP), and calculates the amount of change in the attitude of the video display device in accordance with the amount of change between the first image (MRF) and the second image (MCP).

4. A video display method comprising:
arranging a first polarizing filter (4) having a first polarization characteristic;
arranging a second polarizing filter (24) having a second polarization characteristic contrary to the first polarizing filter (4);
causing a camera (23) of a video display device (2,102) to acquire a first image (MRF) by capturing a marker (3) having a reference pattern (31) via the first polarizing filter (4) in a first attitude and a second image (MCP) by capturing the marker (3) via the first polarizing filter (4) in a second attitude; and
causing an amount-of-change calculation unit (25) to calculate an amount of change between the first image (MRF) and the second image (MCP), and calculate an amount of change in an attitude in accordance with the amount of change between the first image (MRF) and the second image (MCP);
wherein the first polarizing filter (4) and the second polarizing filter (24) are arranged between the marker (3) and a display unit (22) in a state in which the marker (3) and the display unit (22) are opposed to each other; and
wherein the display unit (22)
has a light transmission property allowing an actual video to be seen therethrough,
includes a right-eye display unit and a left-eye display unit, and
is configured to display a right-eye image on the right-eye display unit and a left-eye image on the left-eye display unit based on an image generated according to the amount of change in the attitude.

## Patentansprüche

1. Videoanzeigesystem (1, 101), umfassend:
eine Markierung (3) mit einem Referenzmuster (31),
ein erstes Polarisationsfilter (4) mit einer ersten Polarisationscharakteristik,
eine Videoanzeigevorrichtung (2, 102), die enthält:
eine Kamera (23), die konfiguriert ist zum Aufnehmen der Markierung (3) über das erste Polarisationsfilter (4), und
eine Anzeigeeinheit (22) mit einer Lichtdurchlasseigenschaft, die erlaubt, dass ein tatsächliches Video durch sie gesehen werden kann,
ein zweites Polarisationsfilter (24) mit einer zweiten Polarisationscharakteristik, die derjenigen des ersten Polarisationsfilters (4) entgegengesetzt ist, und
eine Änderungsgrößen-Berechnungseinheit (25), die konfiguriert ist zum:
Berechnen einer Änderungsgröße zwischen einem ersten Bild (MRF), das erhalten wird, indem die Kamera (23) das Referenzmuster (31) in einer ersten Haltung aufnimmt, und einem zweiten Bild (MCP), das erhalten wird, indem die Kamera (23) das Referenzmuster (31) in einer zweiten Haltung aufnimmt, und
Berechnen einer Änderungsgröße einer Haltung gemäß der Änderungsgröße zwischen dem ersten Bild (MRF) und dem zweiten Bild (MCP),
wobei das erste Polarisationsfilter (4) und das zweite Polarisationsfilter (24) zwischen der Markierung (3) und der Anzeigeeinheit (22) in einem Zustand angeordnet sind, in dem die Markierung (3) und die Anzeigeeinheit (22) einander gegenüberliegen, und
wobei die Anzeigeeinheit (22) eine Anzeigeeinheit für das rechte Auge und eine Anzeigeeinheit für das linke Auge umfasst und konfiguriert ist zum Anzeigen eines Bilds für das rechte Auge an der Anzeigeeinheit für das rechte Auge und eines Bilds für das linke Auge an der Anzeigeeinheit für das linke Auge basierend auf einem gemäß der Änderungsgröße der Haltung erzeugten Bild.

2. Videoanzeigesystem (1, 101) nach Anspruch 1, wobei die Änderungsgröße-Berechnungseinheit (25) die Änderungsgröße der Haltung der Videoanzeigevorrichtung (2, 102) gemäß einer Verschiebungsgröße eines zweiten Bildmusters in dem zweiten Bild (MCP) in einer horizontalen Richtung und einer vertikalen Richtung in Entsprechung zu einem ersten Bildmuster in dem ersten Bild (MRF) und gemäß einer Änderungsgröße der Länge des zweiten Bildmusters in der horizontalen Richtung und der vertikalen Richtung in Entsprechung zu dem ersten Bildmuster berechnet.

3. Videoanzeigesystem (101) nach Anspruch 1 oder 2, das weiterhin eine Steuervorrichtung (103) umfasst, die die Änderungsgröße-Berechnungseinheit (25) und eine erste Kommunikationseinheit (106) enthält,
wobei die Videoanzeigevorrichtung (101) weiterhin eine zweite Kommunikationseinheit (105) umfasst, die mit der ersten Kommunikationseinheit (106) verbunden ist und das erste Bild (MRF) und das zweite Bild (MCP) an die Steuervorrichtung (103) über die erste Kommunikationseinheit (106) und die zweite Kommunikationseinheit (105) ausgibt, und
die Änderungsgröße-Berechnungseinheit (25) die Änderungsgröße zwischen dem ersten Bild (MRF) und dem zweiten Bild (MCP) berechnet und die Änderungsgröße der Haltung der Videoanzeigevorrichtung gemäß der Änderungsgröße zwischen dem ersten Bild (MRF) und dem zweiten Bild (MCP) berechnet.

4. Videoanzeigeverfahren, umfassend:
Anordnen eines ersten Polarisationsfilters (4) mit einer ersten Polarisationscharakteristik,
Anordnen eines zweiten Polarisationsfilters (24) mit einer zweiten Polarisationscharakteristik, die derjenigen des ersten Polarisationsfilters (4) entgegengesetzt ist,
Veranlassen einer Kamera (23) einer Videoanzeigevorrichtung (2, 102) zum Erhalten eines ersten Bilds (MRF) durch das Aufnehmen einer Markierung (3) mit einem Referenzmuster (31) über das erste Polarisationsfilter (4) in einer ersten Haltung und eines zweiten Bilds (MCP) durch das Aufnehmen der Markierung (3) über das erste Polarisationsfilter (4) in einer zweiten Haltung, und
Veranlassen einer Größenänderung-Berechnungseinheit (25) zum Berechnen einer Änderungsgröße zwischen dem ersten Bild (MRF) und dem zweiten Bild (MCP) und zum Berechnen einer Änderungsgröße einer Haltung gemäß der Änderungsgröße zwischen dem ersten Bild (MRF) und dem zweiten Bild (MCP),
wobei das erste Polarisationsfilter (4) und das zweite Polarisationsfilter (24) zwischen der Markierung (3) und der Anzeigeeinheit (22) in einem Zustand angeordnet sind, in dem die Markierung (3) und die Anzeigeeinheit (22) einander gegenüberliegen, und
wobei die Anzeigeeinheit (22):
eine Lichtdurchlasseigenschaft aufweist, die erlaubt, dass ein tatsächliches Video durch sie gesehen wird,
eine Anzeigeeinheit für das rechte Auge und eine Anzeigeeinheit für das linke Auge umfasst, und
konfiguriert ist zum Anzeigen eines Bilds für das rechte Auge an der Anzeigeeinheit für das rechte Auge und eines Bilds für das linke Auge an der Anzeigeeinheit für das linke Auge basierend auf einem gemäß der Änderungsgröße der Haltung erzeugten Bild.

## Revendications

1. Système d'affichage vidéo (1, 101) comprenant :
un marqueur (3) ayant un motif de référence (31) ;
un premier filtre polarisant (4) ayant une première caractéristique de polarisation ;
un dispositif d'affichage vidéo (2, 102) comportant
une caméra (23) configurée pour capturer le marqueur (3) par l'intermédiaire du premier filtre polarisant (4), et
une unité d'affichage (22) ayant une propriété de transmission de la lumière permettant de voir une vidéo en cours ;
un deuxième filtre polarisant (24) ayant une deuxième caractéristique de polarisation contraire à celle du premier filtre polarisant (4) ; et
une unité de calcul de quantité de changement (25) configurée pour
calculer une quantité de changement entre une première image (MRF) obtenue de sorte que la caméra (23) capture le motif de référence (31) dans une première attitude et une deuxième image (MCP) obtenue de sorte que la caméra (23) capture le motif de référence (31) dans une deuxième attitude, et
calculer une quantité de changement dans une attitude conformément à la quantité de changement entre la première image (MRF) et la deuxième image (MCP) ;
dans lequel le premier filtre polarisant (4) et le deuxième filtre polarisant (24) sont agencés entre le marqueur (3) et l'unité d'affichage (22) dans un état dans lequel le marqueur (3) et l'unité d'affichage (22) sont en face l'un de l'autre ; et
dans lequel l'unité d'affichage (22) comporte une unité d'affichage oeil droit et une unité d'affichage oeil gauche et est configurée pour afficher une image d'oeil droit sur l'unité d'affichage oeil droit et une image d'oeil gauche sur l'unité d'affichage oeil gauche sur la base d'une image générée conformément à la quantité de changement d'attitude.

2. Système d'affichage vidéo (1, 101) selon la revendication 1, dans lequel l'unité de calcul de quantité de changement (25) calcule la quantité de changement dans l'attitude du dispositif d'affichage vidéo (2, 102) conformément à une quantité décalée d'un deuxième motif d'image dans la deuxième image (MCP) dans une direction horizontale et une direction verticale correspondant à un premier motif d'image dans la première image (MRF), et une quantité de changement d'une longueur du deuxième motif d'image dans la direction horizontale et la direction verticale correspondant au premier motif d'image.

3. Système d'affichage vidéo (101) selon l'une quelconque des revendications 1 et 2, comprenant en outre un dispositif de commande (103) comportant l'unité de calcul de quantité de changement (25) et une première unité de communication (106),
dans lequel le dispositif d'affichage vidéo (101) comporte en outre une deuxième unité de communication (105) connectée à la première unité de communication (106), et délivre en sortie la première image (MRF) et la deuxième image (MCP) au dispositif de commande (103) par l'intermédiaire de la première unité de communication (106) et de la deuxième unité de communication (105), et
l'unité de calcul de quantité de changement (25) calcule la quantité de changement entre la première image (MRF) et la deuxième image (MCP), et calcule la quantité de changement dans l'attitude du dispositif d'affichage vidéo conformément à la quantité de changement entre la première image (MRF) et la deuxième image (MCP).

4. Procédé d'affichage vidéo comprenant :
l'agencement d'un premier filtre polarisant (4) ayant une première caractéristique de polarisation ;
l'agencement d'un deuxième filtre polarisant (24) ayant une deuxième caractéristique de polarisation contraire à celle du premier filtre polarisant (4) ;
l'action consistant à forcer une caméra (23) d'un dispositif d'affichage vidéo (2, 102) à capturer une première image (MRF) en capturant un marqueur (3) ayant un motif de référence (31) par l'intermédiaire du premier filtre polarisant (4) dans une première attitude et une deuxième image (MCP) capturant le marqueur (3) par l'intermédiaire du premier filtre polarisant (4) dans une deuxième attitude ; et
l'action consistant à forcer une unité de calcul de quantité de changement à calculer une quantité de changement entre la première image (MRF) et la deuxième image (MCP), et à calculer une quantité de changement dans une attitude conformément à la quantité de changement entre la première image (MRF) et la deuxième image (MCP) ;
dans lequel le premier filtre polarisant (4) et le deuxième filtre polarisant (24) sont agencés entre le marqueur (3) et une unité d'affichage (22) dans un état dans lequel le marqueur (3) et l'unité d'affichage (22) sont en face l'un de l'autre ; et
dans lequel l'unité d'affichage (22)
a propriété de transmission de la lumière permettant de voir une vidéo en cours ;
comporte une unité d'affichage oeil droit et une unité d'affichage oeil gauche et ;
est configurée pour afficher une image d'oeil droit sur l'unité d'affichage oeil droit et une image d'oeil gauche sur l'unité d'affichage oeil gauche sur la base d'une image générée conformément à la quantité de changement d'attitude.
